# FASCICULE DE BREVET EUROPEEN

(11) **EP 3 377 347 B1**
(45) Date de publication et mention de la délivrance du brevet: **08.04.2020**
(21) Numéro de dépôt: 16805301.5
(22) Date de dépôt: 09.11.2016
(51) Int. Cl.: B60J 7/11, B60J 7/16, B60S 5/06, B60K 1/04

(54) **VEHICULE TERRESTRE DE TRANSPORT EN COMMUN A CAPOTAGE SUPERIEUR FONCTIONNEL**
LANDFAHRZEUG FÜR ÖFFENTLICHES VERKEHRSMITTEL MIT EINEM FUNKTIONELLEN OBEREN DACHSYSTEM
LAND VEHICLE FOR PUBLIC TRANSPORT, WITH A FUNCTIONAL UPPER ROOF SYSTEM

(30) Priorité: 16.11.2015 FR 1560977
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR)
(74) Mandataire: IPAZ
(86) Numéro de dépôt international: PCT/EP2016/077107
(87) Numéro de publication internationale: WO 2017/084934

(56) Documents cités:
- CN-U- 201 534 570
- US-A- 4 217 764
- US-A- 4 748 825
- US-A1- 2014 250 800
- US-B1- 6 397 965

## Description

La présente invention concerne un véhicule terrestre de transport en commun, de type bus ou tram-bus, en particulier un véhicule électrique muni de modules de stockage d'énergie électrique, en particulier rechargeables.

Le domaine de l'invention est le domaine des véhicules terrestres de transport en commun, de type bus ou tram-bus.

### Etat de la technique

Les bus de transport en commun, voir par exemple le document US 4 748 825 A, comportent un capot supérieur assurant l'étanchéité de l'habitacle. Généralement, un tel capot est réalisé en métal et est soudé sur la paroi supérieure du bus, de sorte qu'il ne peut être démonté sans dégrader le bus.

Pour ces raisons, entre autres, les dispositifs additionnels prévus pour un bus, tels qu'un bloc de climatisation ou des batteries électriques, sont disposés au-dessus de la paroi supérieure, et nécessitent, la plupart du temps, un capotage additionnel en plus du capot original du bus.

Dans certains bus, le capot supérieur d'un bus peut être démonté en totalité ou en partie. Le démontage du capot supérieur dans ces bus est une opération nécessitant des outils spécifiques pour porter et déplacer, ou pour maintenir, le capot supérieur lorsqu'il est démonté de la paroi supérieure du bus.

De plus, le capot supérieur étant très encombrant, une telle opération de démontage ne peut pas être réalisée dans un environnement confiné.

En outre, compte tenu de la taille et des dimensions du capot supérieur, le démontage d'un tel capot est peu ergonomique, difficile à réaliser et présente des risques de blessures des opérateurs.

Pour toutes ces raisons, l'accès à un compartiment technique aménagé dans l'épaisseur de la paroi supérieure, depuis l'extérieur du bus est rendu difficile et peu ergonomique.

Un but de la présente invention est de pallier ces inconvénients.

Un autre but de l'invention est de proposer un véhicule terrestre de transport en commun présentant un accès plus simple et plus ergonomique à un compartiment aménagé dans sa paroi supérieure.

Il est aussi un but de l'invention de proposer un véhicule terrestre de transport en commun présentant un accès à un compartiment aménagé dans sa paroi supérieure, moins dangereux et sans outils spécifiques.

Enfin, un autre but de l'invention est de proposer un véhicule terrestre de transport en commun permettant un accès à un compartiment aménagé dans sa paroi supérieure, dans un environnement plus confiné que les véhicules actuels.

### Exposé de l'invention

L'invention permet d'atteindre au moins l'un de ces buts par un véhicule terrestre de transport en commun selon la revendication 1, en particulier de type bus ou tram-bus, comprenant :
- un capot, dit principal, autorisant, dans une position ouverte, un accès, dit principal, dans au moins une partie d'une paroi supérieure dudit véhicule, et
- au moins un capot, dit secondaire, plus petit que ledit capot principal, prévu dans ledit capot principal, et autorisant, dans une position ouverte, un accès, dit secondaire, dans ladite paroi supérieure au travers dudit capot principal.

Ainsi, le véhicule selon l'invention propose deux modes d'accès différents dans un compartiment technique aménagé dans la paroi supérieure : un accès principal par le capot principal pour y réaliser une opération lourde de grande ampleur et un accès par le capot secondaire pour y réaliser une opération plus légère, par exemple des opérations de maintenance. Autrement dit, dans le véhicule selon l'invention, il n'est pas nécessaire d'ouvrir le capot principal à chaque accès à un compartiment technique aménagé dans la paroi supérieure.

Le capot secondaire étant plus petit que le capot principal, son ouverture est plus simple, plus ergonomique, moins dangereuse et ce, sans outils spécifiques. Surtout, le capot secondaire peut être prévu suffisamment petit pour pouvoir être ouvert dans un environnement confiné, dans lequel les capots des véhicules de l'état de la technique ne peuvent pas être ouverts.

Dans une version préférée, au moins un capot secondaire peut être prévu rotatif autour d'un axe de rotation, entre une position fermée et une position ouverte autorisant l'accès dans la paroi supérieure.

Ainsi, l'accès dans la paroi supérieure du véhicule est plus ergonomique, car il n'est pas nécessaire de démonter entièrement le capot secondaire.

Avantageusement, au moins un capot secondaire peut être prévu rotatif autour d'un axe de rotation longitudinal.

Ainsi, il est possible d'avoir accès dans la paroi supérieure depuis le côté du véhicule, ce qui est plus simple.

Préférentiellement, au moins un capot secondaire peut être prévu rotatif autour d'un axe de rotation longitudinal positionné à distance d'un coin supérieur dudit véhicule, de sorte que ledit capot autorise un accès depuis ledit coin supérieur.

Un tel accès est plus simple, plus ergonomique et plus direct.

Alternativement, au moins un capot secondaire peut être prévu rotatif autour d'un axe de rotation transversal.

Un tel capot secondaire peut être disposé en partie avant ou en partie arrière du véhicule, pour accéder à un compartiment technique prévu à l'avant ou à l'arrière du véhicule.

Suivant un mode de réalisation avantageux, le véhicule selon l'invention peut comprendre, pour au moins un capot secondaire, au moins un moyen de maintien en position ouverte dudit capot secondaire.

Le moyen de maintien en position ouverte d'au moins un capot secondaire peut comprendre une béquille se déployant lorsque le capot secondaire est en position ouverte.

Une telle béquille permet de maintenir en position ouverte le capot secondaire qui vient en appui sur la béquille. Celle-ci peut se déployer automatiquement lors de la rotation du capot secondaire. Alternativement la béquille peut être déployée et positionnée manuellement par un opérateur.

Une telle béquille peut être fixée à un cadre, prévu pour ledit capot secondaire, dans le capot principal. Alternativement, une telle béquille peut être fixée dans la paroi supérieure sur un élément de l'ossature du véhicule.

Alternativement, le moyen de maintien en position ouverte, d'au moins un capot secondaire, peut comprendre un ressort retournant à sa position de repos lorsque le capot secondaire est en position ouverte, un piston ou un vérin, en particulier articulé.

Suivant un exemple de réalisation avantageux, mais nullement limitatif, au moins un capot secondaire peut présenter une largeur, mesurée dans la direction transversale du véhicule, inférieure ou égale à la moitié de la largeur dudit véhicule ou du capot principal.

Une telle largeur permet un accès dans la paroi supérieure suffisamment large tout en limitant la hauteur nécessaire à l'ouverture du capot secondaire, au-dessus du véhicule.

De plus, au moins un capot secondaire peut présenter une longueur, mesurée dans la direction longitudinale du véhicule, inférieure ou égale à la moitié de la longueur du capot principal.

Le véhicule selon l'invention peut en outre comprendre au moins un moyen de verrouillage en position fermée d'au moins un capot secondaire.

Un tel moyen de verrouillage peut comprendre une serrure équipant le capot secondaire, ou prévue dans le capot principal ou encore dans la paroi supérieure du véhicule.

Avantageusement, au moins un capot secondaire, respectivement le capot principal, peut comprendre au moins un moyen d'étanchéité à l'eau dudit capot, pour éviter que de l'eau pénètre à l'intérieur de la paroi supérieure, et en particulier dans un logement aménagé dans ladite paroi, lorsque ledit capot est en position fermée.

Suivant l'invention, au moins un moyen d'étanchéité du capot principal comprend une première languette :
- prévue sur au moins une partie de la périphérie dudit capot principal,
- faisant saillie dudit capot principal vers le bas, et
- positionnée de sorte que ladite première languette se trouve à l'extérieur d'une deuxième languette, prévue sur une surface du côté de la paroi supérieure et faisant saillie vers le haut.

La première languette, respectivement la deuxième languette, peut être munie d'un joint d'étanchéité, venant en contact de ladite surface au niveau de la paroi supérieure, respectivement du capot principal.

Le capot secondaire peut être muni d'un moyen d'étanchéité similaire ou identique. Alternativement, le capot secondaire peut être muni d'un joint d'étanchéité, qui n'est pas disposé sur une languette et qui vient au contact du capot principal.

Dans une version préférée, mais nullement limitative, le véhicule selon l'invention peut comprendre un compartiment technique, dit berceau, prévu dans la paroi supérieure dudit véhicule pour accueillir :
- un ou plusieurs modules de stockage d'énergie électrique, en particulier rechargeables, et
- un ou plusieurs dispositifs électrique(s)/électronique(s) relatifs auxdits modules de stockage d'énergie électrique.

Dans cette version, le capot principal peut être prévu pour recouvrir au moins en partie, en particulier en totalité, le berceau pour autoriser un accès audit berceau en vue de disposer dans le berceau, respectivement enlever dudit berceau, un ou plusieurs modules de stockage.

Toujours dans cette version, au moins un capot secondaire peut être prévu pour autoriser un accès à une zone latérale dudit berceau, dans le sens longitudinal du véhicule, comprenant au moins l'un des dispositifs électrique(s)/électronique(s) en vue de :
- disposer dans ladite zone latérale, respectivement enlever de ladite zone latérale, un ou plusieurs desdits dispositifs, et
- réaliser une intervention sur un ou plusieurs desdits dispositifs ; sans avoir à ouvrir le capot principal.

Les dispositifs électrique(s)/électronique(s) peuvent comprendre un boîtier de gestion des modules de stockage d'énergie électrique, un ou des convertisseurs de puissance, etc.

Chaque module de stockage d'énergie électrique peut comprendre une ou plusieurs batteries, en particulier LMP® (pour « Lithium métal polymère »), ou une ou plusieurs supercapacité(s).

Avantageusement, le véhicule selon l'invention peut être un véhicule électrique, tel qu'un bus électrique ou tram-bus électrique, rechargeable.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1-3 sont des représentations schématiques d'un véhicule selon l'invention ;
- la FIGURE 4 est une représentation schématique du véhicule des FIGURES 1-3 sans le capotage de la paroi supérieure ;
- la FIGURE 5 est une représentation schématique simplifiée selon une vue en coupe du véhicule des FIGURES 1-4 ;
- la FIGURE 6 est une représentation schématique d'un exemple d'étanchéité mis en œuvre pour le capot principal du véhicule des FIGURES 1-5 ; et
- les FIGURES 7a-7d sont des représentations schématiques selon différentes vue du capotage supérieur d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

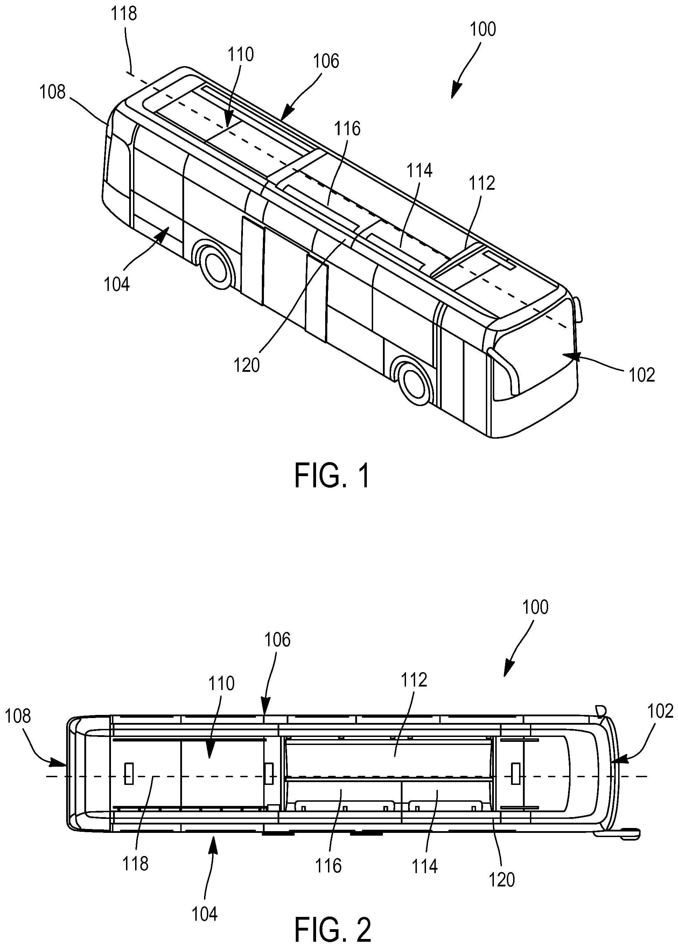

Les FIGURES 1-3 sont des représentations schématiques d'un exemple de réalisation non limitatif d'un véhicule selon l'invention.

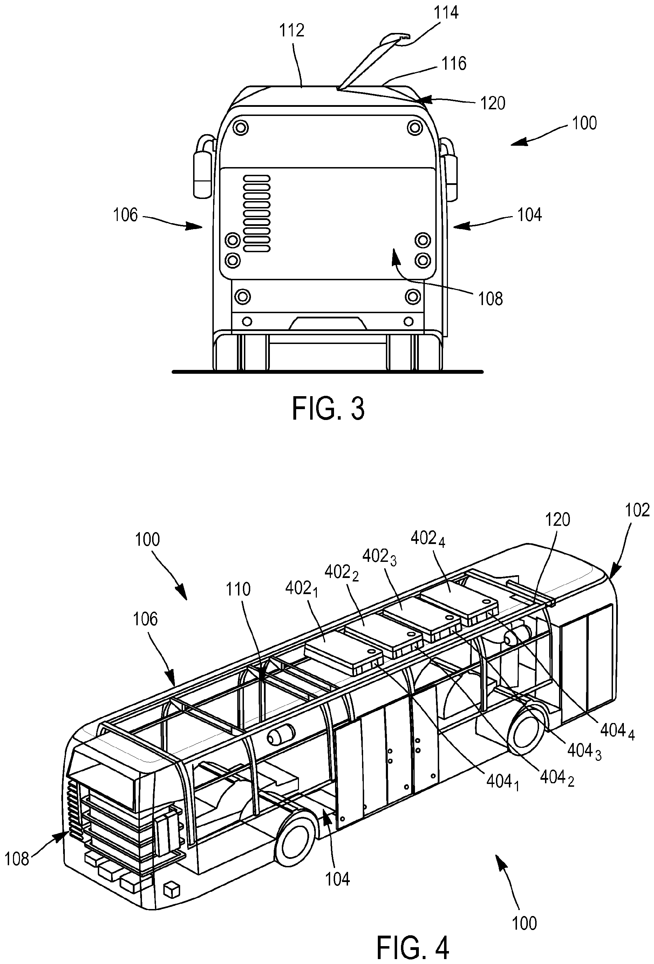

Le véhicule 100 représenté sur les FIGURES 1-3 est un bus électrique rechargeable. Le véhicule 100 est représenté sur la FIGURE 1 selon une vue isométrique, sur la FIGURE 2 selon une vue de dessus et sur la FIGURE 3 selon une vue de derrière.

Le bus 100 comporte une paroi avant 102, deux parois latérales longitudinales 104 et 106, une paroi arrière 108 et une paroi supérieure 110.

La paroi supérieure 110 est formée par une cloison en acier fixée à l'ossature (non visible) du bus par exemple par soudage.

La paroi supérieure 110 est pourvue d'un capot principal 112 vissé sur la paroi supérieure ou sur une ossature du bus, directement ou par l'intermédiaire d'un cadre. Dans tous les cas, le capot principal 112 peut être enlevé de la paroi supérieure 110 sans destruction/dégradation de la paroi supérieure 110.

Le capot principal 112 s'étend sur au moins 80% de la largeur du bus 100 et sur au moins 30% de la longueur du bus. Le capot principal 112 peut être démonté et enlevé entièrement de la paroi supérieure 110, suivant une direction perpendiculaire à la paroi supérieure 110, après avoir dévissé les vis de fixation qui le maintiennent sur la paroi supérieure 110 du bus. Une fois enlevé, le capot principal 112 autorise un accès principal de grandes dimensions dans l'épaisseur de la paroi supérieure 110.

Le capot principal 112 peut être réalisé en acier, en aluminium ou en plastique.

Suivant un exemple de réalisation particulier, nullement limitatif, le capot principal présente une longueur de l'ordre de 4500 mm et une largeur de l'ordre de 1800 mm.

Le bus 100 est en outre muni de deux capots secondaires 114 et 116, aménagés dans le capot principal 112, de sorte que, lorsque le capot principal 112 est enlevé, les capots secondaires 114 et 116 sont également enlevés. Chaque capot secondaire 114 et 116 peut être fixé au capot principal 112 directement ou par l'intermédiaire d'un cadre rapporté dans une ouverture aménagée dans le capot principal 112.

Dans l'exemple représenté, les capots secondaires 114 et 116 sont alignés dans le sens longitudinal du bus 100.

Chaque capot secondaire 114 et 116 est de plus petites dimensions comparées aux dimensions du capot principal 112. Sur les FIGURES 1-3, chaque capot secondaire 114 et 116 présente une largeur inférieure ou égale à la moitié de la largeur du capot principal 112 mesurée dans le sens de la largeur du bus 100. De plus, le capot secondaire 116 est plus long que le capot secondaire 114.

Chaque capot secondaire 114-116 est mobile en rotation autour d'un axe de rotation longitudinal 118 entre une position ouverte laissant accès à l'intérieur de la paroi supérieure 110 et une position fermée. Sur la FIGURE 3, le capot 114 est représenté en position ouverte.

L'axe de rotation 118 est déporté par rapport au bord supérieur 120 du bus 100, se trouvant du côté de la paroi latérale 104, de sorte que l'accès à l'intérieur de la paroi supérieure 110 est réalisé depuis le bord supérieur 120 du bus 100.

Chaque capot secondaire 114-116 est muni d'une béquille (non visible sur les FIGURES 1-2), articulée, se déployant lors de l'ouverture dudit capot 114-116. La béquille articulée peut être fixée sur le capot principal 112, ou sur un cadre du capot secondaire 114-116, ou encore sur une ossature de la paroi supérieure 110, de sorte que lorsque le capot secondaire 114-116 est ouvert, la béquille maintient ledit capot secondaire 114-116 en position ouverte.

Chaque capot secondaire 114-116 est muni d'une serrure (non visible sur les FIGURES 1-2) permettant de verrouiller ledit capot secondaire 114-116 sur le capot principal 112, ou sur un cadre du capot secondaire 114-116, ou encore sur une ossature de la paroi supérieure 110, de sorte que, lorsque le capot est en position fermée, il ne peut pas être ouvert intempestivement et sans autorisation.

Chaque capot secondaire 114 et 116 peut être réalisé en acier, en aluminium ou en plastique.

Suivant un exemple de réalisation particulier, nullement limitatif, le capot secondaire 114 présente une longueur de l'ordre de 1950 mm et une largeur de l'ordre de 800 mm.

Suivant un exemple de réalisation particulier, nullement limitatif, le capot secondaire 116 présente une longueur de l'ordre de 2500 mm et une largeur de l'ordre de 800 mm.

Dans une version particulière, mais nullement limitative, le véhicule 100 des FIGURES 1-3 peut être muni, dans sa paroi supérieure 110, d'un ou plusieurs compartiments techniques prévus pour accueillir, par exemple, des modules de stockage d'énergie électrique et des appareils électriques ou électroniques associés.

La FIGURE 4 est une représentation schématique du véhicule 100 des FIGURES 1-3 sans le capotage de la paroi supérieure 110.

Tel que représenté sur la FIGURE 4, le véhicule 100 comporte quatre modules 402₁-402₄ de stockage d'énergie électrique rechargeables dans un logement prévu dans la paroi supérieure 110, également appelé berceau. Les modules de stockage 402₁-402₄ sont alignés dans la direction longitudinale du véhicule 100.

L'ensemble du berceau est recouvert par le capot principal 112 (non représenté sur la FIGURE 4). Ainsi, pour intervenir sur les modules de stockage 402₁-402₄, par exemple en vue d'enlever un des modules du berceau ou de disposer un module dans le berceau, il est nécessaire d'enlever le capot principal 112.

Le berceau comprend également, du côté du bord supérieur 120, quatre appareils électriques, à savoir quatre boîtiers 404₁-404₄ de gestion des modules de stockage 402₁-402₄, également appelés modules BMS (« Battery Management System »).

L'accès aux appareils 404 est réalisé en ouvrant soit le capot 114 soit le capot 116 et ne nécessite pas d'enlever le capot principal 112. Ainsi, l'accès aux appareils 404 peut être réalisé de manière simple et rapide, même dans un environnement confiné, sans utilisation d'outils spécifiques de levage, et ce avec très peu de danger pour l'opérateur. Ainsi, l'accès aux appareils 404 peut être réalisé avec plus de flexibilité dans le temps et dans l'espace.

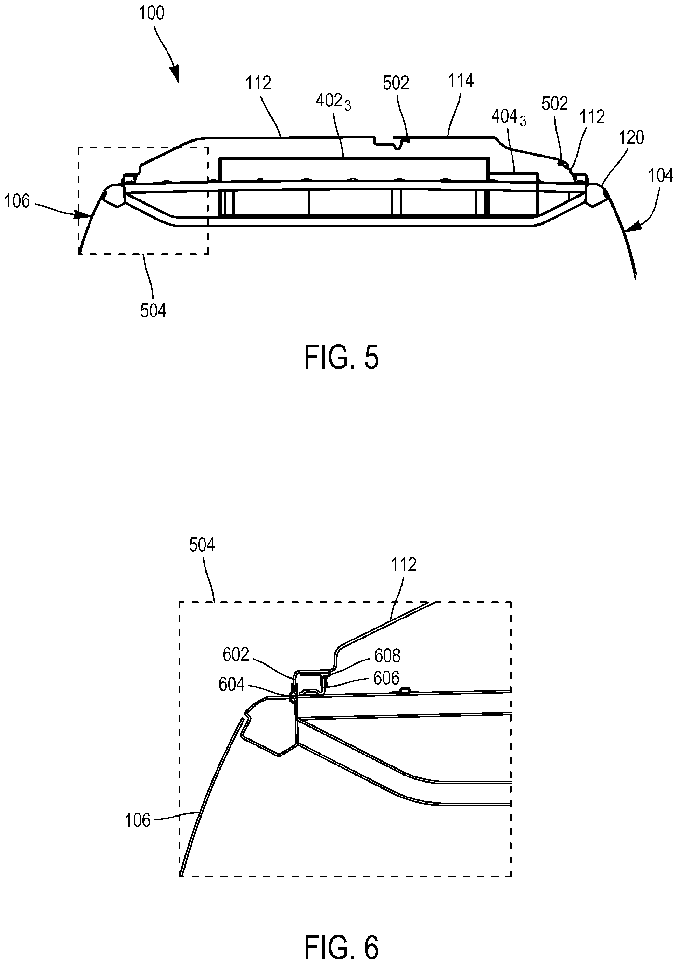

La FIGURE 5 est une représentation d'un exemple d'étanchéité mis en œuvre pour le capot principal du véhicule des FIGURES 1-4.

Tel que visible sur la FIGURE 5, le capot secondaire 114 prévu dans le capot principal 112 est muni d'un joint d'étanchéité 502 disposé au niveau de l'extrémité du capot 114 sur tout le pourtour dudit capot 114.

Bien que non visible sur la FIGURE 5, le capot secondaire 116 est également muni d'un joint d'étanchéité similaire ou identique.

La FIGURE 6 est une représentation d'un exemple d'étanchéité mis en œuvre pour le capot principal 112 du véhicule des FIGURES 1-4.

Plus particulièrement, la FIGURE 6 est un agrandissement d'une zone 504 de la FIGURE 5.

Tel que représenté sur la FIGURE 6, le capot principal 112 comporte une languette, ou une lèvre, 602 faisant saillie du capot principal 112 vers le bas, prévue au niveau de l'extrémité du capot 112 sur tout le pourtour dudit capot 112. La languette 602 est équipée d'un joint d'étanchéité 604. La languette 602, équipée du joint d'étanchéité 604, vient appuyer sur une surface au niveau de la paroi supérieure du véhicule.

Le véhicule 100 comporte également une languette, ou une lèvre, 606 faisant saillie vers le capot principal 112, prévue sensiblement en regard de de la périphérie du capot principal 112. La languette 606 est également équipée d'un joint d'étanchéité 608. La languette 606 équipée du joint d'étanchéité 608 vient appuyer sur une surface du capot principal 112.

De plus, la languette 602 prévue sur le capot principal 112 vient se positionner à l'extérieur de la languette 606 prévue sur le véhicule.

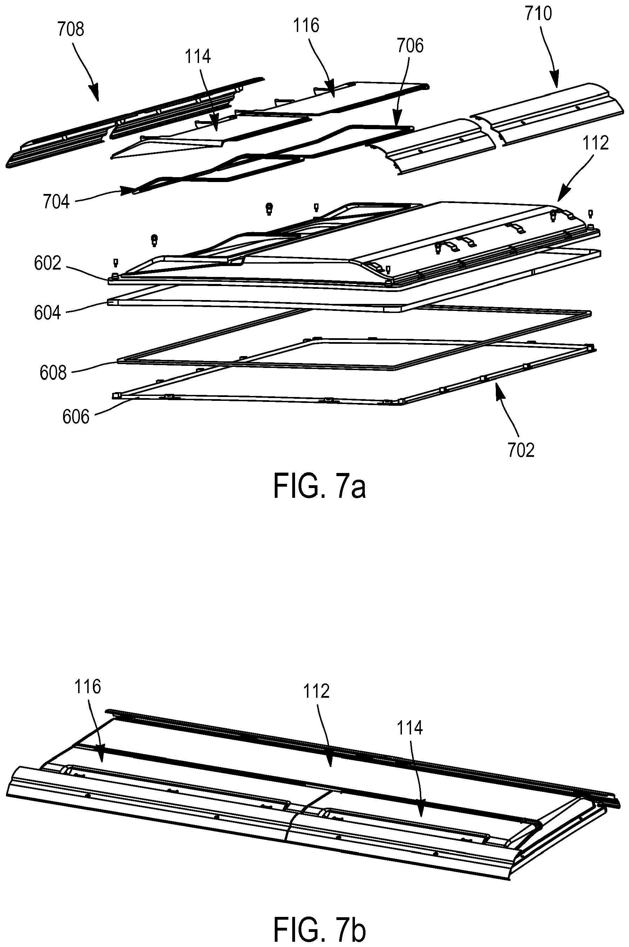

Les FIGURES 7a-7d sont des représentations schématiques selon différentes vue du capotage supérieur d'un véhicule selon l'invention, isolé du véhicule.

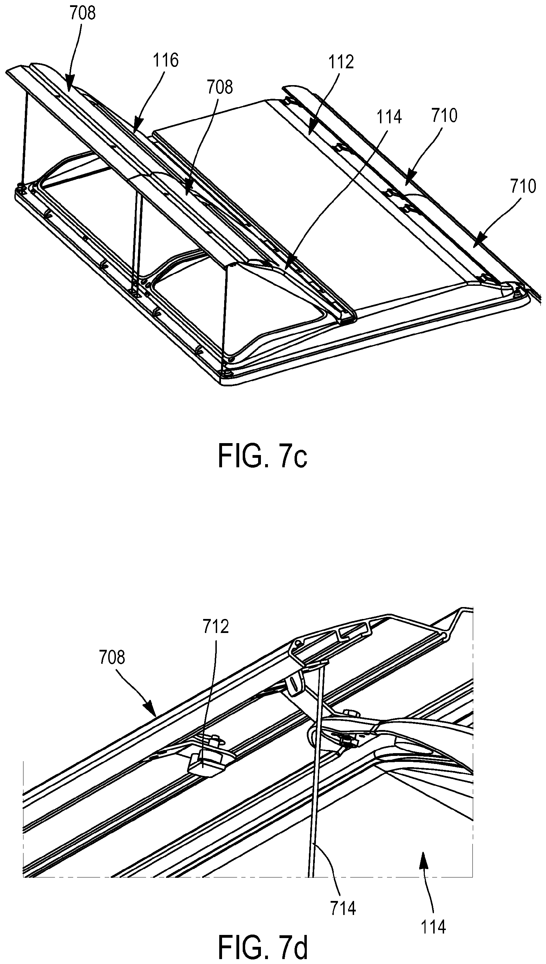

En particulier, la FIGURE 7a est une représentation schématique selon une vue éclatée du capot principal 112 et des capots secondaires 114 et 116. La FIGURE 7b est une représentation schématique selon une vue assemblée du capot principal 112 et des capots secondaires 114 et 116 en position fermée. La FIGURE 7c est une représentation schématique selon une vue assemblée du capot principal 112 et des capots secondaires 114 et 116 en position ouverte. La FIGURE 7d est une représentation schématique d'une partie du capot secondaire 114 en position ouverte.

Tel que visible sur la FIGURE 7a, les languettes 602 et 606, ainsi que les joints d'étanchéité 604 et 608 parcourent toute la périphérie du capot principal 112. La languette 606 est prévue sur un cadre 702 du capot principal 112 prévu pour être fixé sur la paroi supérieure 110, ou le toit, du bus 100.

De plus, chaque capot secondaire 114 et 116 est muni d'un cadre, respectivement 704 et 706, prévu pour être fixé dans le capot principal 112. La FIGURE 7a montre en outre des éléments d'habillage 708 et 710 pour habiller les capots 112-116 sur les bordures latérales du véhicule, du côté des parois latérales 104 et 106.

Sur la FIGURE 7a les éléments de capotage sont montrés de manière éclatée et sur la FIGURE 7b les éléments de capotage sont montrés assemblés.

Sur la FIGURE 7c les éléments de capotage sont assemblés et les capots secondaires 114 et 116 sont en position ouverte.

La FIGURE 7d montre le capot secondaire 114 de manière partielle, selon une vue de dessous, lorsque le capot secondaire 114 est en position ouverte. Tel que visible sur cette FIGURE 7d, le capot secondaire 114 est munie d'une serrure 712 permettant de verrouiller ledit capot secondaire 114 en position fermée, par exemple sur le cadre 704 du capot 114.

Le capot secondaire 114 est en outre muni d'une ou deux béquilles 714 permettant de maintenir le capot secondaire 114 en position ouverte, par exemple par appui contre le cadre 704 du capot secondaire 114.

Bien entendu, la capot secondaire 116 est aussi munie d'une serrure et d'une, voire deux, béquilles de manière similaire au capot secondaire 114.

Ainsi, comme représenté sur les FIGURES 7a-7c, il est clair que les capots secondaires 114 et 116 sont aménagés dans le capot principal 112, et sont solidaires du capot principal 112, de sorte que, lorsque le capot principal 112 est enlevé, les capots secondaires 114 et 116 viennent avec le capot principal 112.

Le véhicule selon l'invention présente un toit plat, ne comportant aucun élément faisant saillie vers le haut. De cette façon, la résistance à l'air est diminuée, ce qui permet de diminuer la consommation du véhicule et d'augmenter son autonomie et sa stabilité. De plus, cela permet de diminuer les limitations de passage portant sur la hauteur du véhicule.

Bien entendu, l'invention n'est pas limitée aux exemples détaillés ci-dessus. Par exemple, l'invention n'est pas limitée aux bus et peut par exemple être appliquée aux tram-bus et à d'autres véhicules de transport en commun.

De plus, le nombre, la position et les dimensions des capots peuvent différer de ceux décrits dans la présente demande sans sortir du cadre de la présente invention.

En outre, la paroi supérieure peut comporter plusieurs logements, adjacents ou non. Ces logements peuvent être utilisés pour accueillir d'autres appareils que ceux décrits, tels que par exemple un bloc de climatisation, de traitement d'air, d'éclairage, etc.

## Revendications

1. Véhicule (100) terrestre de transport en commun, en particulier de type bus, comprenant :
- un capot (112), dit principal, autorisant, dans une position ouverte, un accès, dit principal, dans au moins une partie d'une paroi supérieure (110) dudit véhicule (100),
- au moins un capot (114, 116), dit secondaire, plus petit que ledit capot principal (112), prévu dans ledit capot principal (112), et autorisant, dans une position ouverte, un accès, dit secondaire, dans ladite paroi supérieure (110) au travers dudit capot principal (112), et
- au moins un moyen d'étanchéité (602-608) à l'eau dudit capot principal (112) ;
**caractérisé en ce qu'**au moins un moyen d'étanchéité du capot principal (112) comprend une première languette (602) :
- prévue sur au moins une partie de la périphérie dudit capot principal (112),
- faisant saillie dudit capot principal (112) vers le bas, et
- positionnée de sorte que ladite première languette (602) se trouve à l'extérieur d'une deuxième languette (606), prévue sur une surface du côté de la paroi supérieure (110) et faisant saillie vers le haut.

2. Véhicule (100) selon la revendication précédente, **caractérisé en ce qu'**au moins un capot secondaire (114, 116) est prévu rotatif autour d'un axe de rotation (118), entre une position fermée et une position ouverte autorisant l'accès dans la paroi supérieure (110).

3. Véhicule (100) selon la revendication précédente, **caractérisé en ce qu'**au moins un capot secondaire (114, 116) est prévu rotatif autour d'un axe de rotation longitudinal (118).

4. Véhicule (100) selon la revendication précédente, **caractérisé en ce qu'**au moins un capot secondaire (114, 116) est prévu rotatif autour d'un axe de rotation longitudinal (118) positionné à distance d'un coin supérieur (120) dudit véhicule (100), de sorte que ledit capot secondaire (114, 116) autorise un accès depuis ledit coin supérieur (120).

5. Véhicule selon l'une quelconque des revendications précédentes, **caractérisé en ce qu'**au moins un capot est prévu rotatif autour d'un axe de rotation transversal.

6. Véhicule (100) selon l'une quelconque des revendications précédentes, **caractérisé en ce qu'**il comprend un moyen (714) de maintien en position ouverte d'au moins un capot secondaire (114, 116).

7. Véhicule (100) selon la revendication précédente, **caractérisé en ce que** le moyen de maintien en position ouverte comprend une béquille (714) se déployant lorsque le capot secondaire (114, 116) est en position ouverte.

8. Véhicule (100) selon l'une quelconque des revendications précédentes, **caractérisé en ce qu'**au moins un capot secondaire (114, 116) présente une largeur, mesurée dans la direction transversale du véhicule (100), inférieure ou égale à la moitié de la largeur dudit véhicule (100) ou du capot principal (112).

9. Véhicule (100) selon l'une quelconque des revendications précédentes, **caractérisé en ce qu'**au moins un capot secondaire (114, 116) présente une longueur, mesurée dans la direction longitudinale du véhicule (100), inférieure ou égale à la moitié de la longueur du capot principal (112).

10. Véhicule (100) selon l'une quelconque des revendications précédentes, **caractérisé en ce qu'**il comprend au moins un moyen de verrouillage (712) en position fermée d'au moins un capot secondaire (114, 116).

11. Véhicule (100) selon l'une quelconque des revendications précédentes, **caractérisé en ce qu'**il comprend au moins un moyen d'étanchéité (502) à l'eau d'au moins un capot secondaire (114, 116).

12. Véhicule (100) selon la revendication 11, **caractérisé en ce qu'**au moins un moyen d'étanchéité à l'eau du capot secondaire (114, 116) est identique à au moins un moyen d'étanchéité à l'eau du capot principal (112).

13. Véhicule (100) selon l'une quelconque des revendications précédentes, **caractérisé en ce qu'**il comprend un compartiment technique, dit berceau, prévu dans la paroi supérieure (110) dudit véhicule (100) pour accueillir :
- un ou plusieurs modules (402₁-402₄) de stockage d'énergie électrique, en particulier rechargeables, et
- un ou plusieurs dispositifs (404₁-404₄) électrique(s)/électronique(s) relatifs auxdits modules de stockage d'énergie électrique (402₁-402₄) ;
le capot principal (112) étant prévu pour recouvrir ledit berceau et au moins un capot secondaire (114, 116) étant prévu pour autoriser un accès à une zone latérale dudit berceau, dans le sens longitudinal dudit véhicule (100), comprenant un desdits dispositifs électrique(s)/électronique(s) (404₁-404₄).

14. Véhicule (100) selon l'une quelconque des revendications précédentes, **caractérisé en ce qu'**il s'agit d'un bus ou tram-bus électrique rechargeable.

## Patentansprüche

1. Landfahrzeug (100) für öffentliches Verkehrsmittel, insbesondere als Bus, umfassend:
- ein Dach (112), das sogenannte Hauptdach, das in einer geöffneten Stellung einen sogenannten Hauptzugang zu mindestens einem Teil einer oberen Wand (110) des Fahrzeugs (100) ermöglicht,
- mindestens ein Dach (114, 116), das sogenannte Zweitdach, das kleiner als das Hauptdach (112) und im Hauptdach (112) vorgesehen ist und in einer geöffneten Stellung einen sogenannten Zweitzugang zur oberen Wand (110) durch das Hauptdach (112) hindurch ermöglicht, und
- mindestens eine wasserdichtende Einrichtung (602-608) für das Hauptdach (112);
**dadurch gekennzeichnet, dass** mindestens eine dichtende Einrichtung des Hauptdachs (112) eine erste Lasche (602) umfasst:
- welche auf mindestens einem Teil des Umfangs des Hauptdachs (112) vorgesehen ist,
- aus dem Hauptdach (112) nach unten herausragt, und
- derart gelagert ist, dass die erste Lasche (602) auf der Außenseite einer zweiten Lasche (606) angeordnet ist, welche auf einer Oberfläche auf der Seite der oberen Wand (110) vorgesehen ist und nach oben herausragt.

2. Fahrzeug (100) nach dem vorhergehenden Anspruch, **dadurch gekennzeichnet, dass** wenigstens ein Zweitdach (114, 116) zwischen einer geschlossenen und einer geöffneten, den Zugang zur oberen Wand (110) ermöglichenden Stellung um eine Drehachse (118) drehbar vorgesehen ist.

3. Fahrzeug (100) nach dem vorhergehenden Anspruch, **dadurch gekennzeichnet, dass** wenigstens ein Zweitdach (114, 116) um eine Längsdrehachse (118) drehbar vorgesehen ist.

4. Fahrzeug (100) nach dem vorhergehenden Anspruch, **dadurch gekennzeichnet, dass** wenigstens ein Zweitdach (114, 116) um eine Längsdrehachse (118) drehbar vorgesehen ist, welche von einer oberen Ecke (120) des Fahrzeugs (100) derart beabstandet gelagert ist, sodass das Zweitdach (114, 116) einen Zugang von der oberen Ecke (120) aus ermöglicht.

5. Fahrzeug nach einem der vorhergehenden Ansprüche, **dadurch gekennzeichnet, dass** wenigstens ein Dach um eine Querdrehachse drehbar vorgesehen ist.

6. Fahrzeug (100) nach einem der vorhergehenden Ansprüche, **dadurch gekennzeichnet, dass** es eine Haltevorrichtung (714) umfasst, welche mindestens ein Zweitdach (114, 116) in einer geöffneten Stellung hält.

7. Fahrzeug (100) nach dem vorhergehenden Anspruch, **dadurch gekennzeichnet, dass** die in einer geöffneten Stellung haltende Halteeinrichtung einen Ständer (714) umfasst, welcher bei geöffneter Stellung des Zweitdachs (114, 116) ausgezogen wird.

8. Fahrzeug (100) nach einem der vorhergehenden Ansprüche, **dadurch gekennzeichnet, dass** wenigstens ein Zweitdach (114, 116) eine Breite aufweist, welche, in der Querrichtung des Fahrzeugs (100) gemessen, kleiner als die Hälfte oder gleich der Hälfte der Breite des Fahrzeugs (100) oder des Hauptdachs (112) ist.

9. Fahrzeug (100) nach einem der vorhergehenden Ansprüche, **dadurch gekennzeichnet, dass** wenigstens ein Zweitdach (114, 116) eine Länge aufweist, welche, in der Längsrichtung des Fahrzeugs (100) gemessen, kleiner als die Hälfte oder gleich der Hälfte der Länge des Hauptdachs (112) ist.

10. Fahrzeug (100) nach einem der vorhergehenden Ansprüche, **dadurch gekennzeichnet, dass** es mindestens eine Verriegelungseinrichtung (712) zur Verriegelung mindestens eines Zweitdachs (114, 116) in geschlossener Stellung umfasst.

11. Fahrzeug (100) nach einem der vorhergehenden Ansprüche, **dadurch gekennzeichnet, dass** es mindestens eine wasserdichtende Einrichtung (502) für mindestens ein Zweitdach (114, 116) umfasst.

12. Fahrzeug (100) nach Anspruch 11, **dadurch gekennzeichnet, dass** mindestens eine wasserdichtende Einrichtung für das Zweitdach (114, 116) gleich mindestens einer wasserdichtenden Einrichtung für das Hauptdach (112) ist.

13. Fahrzeug (100) nach einem der vorhergehenden Ansprüche, **dadurch gekennzeichnet, dass** es ein Technikfach, eine sogenannte Mulde, umfasst, die in der oberen Wand (110) des Fahrzeugs (100) vorgesehen ist zur Aufnahme von:
- einem oder mehreren, insbesondere aufladbaren Modulen (402₁-402₄) zur Speicherung von elektrischer Energie, und
- einer oder mehreren elektrischen/elektronischen Vorrichtungen (404₁-404₄), die mit den Modulen zur Speicherung von elektrischer Energie (402₁-402₄) in Bezug stehen;
wobei das Hauptdach (112) dazu vorgesehen ist, die Mulde zu überdecken, und mindestens ein Zweitdach (114, 116) dazu vorgesehen ist, einen Zugang zu einem Seitenbereich der Mulde in der Längsrichtung des Fahrzeugs (100) zu ermöglichen, welcher Bereich eine der elektrischen/ elektronischen Vorrichtungen (404₁-404₄) umfasst.

14. Fahrzeug (100) nach einem der vorhergehenden Ansprüche, **dadurch gekennzeichnet, dass** es sich um einen aufladbaren Elektrobus oder Elektrostraßenbahn-Bus handelt.

## Claims

1. A public transportation land vehicle (100), in particular of the bus type, comprising:
- a cover (112), called main cover, allowing, in an open position, an access, called main access, in at least one part of an upper panel (110) of said vehicle (100),
- at least one cover (114, 116), called secondary cover, smaller than said main cover (112), provided in said main cover (112), and allowing, in an open position, an access, called secondary access, in said upper panel (110) through said main cover (112), and
- at least one watertightness means (602-608) of the main cover (112);
**characterized in that** at least one watertightness means of the main cover (112) comprises a first strip (602):
- provided on at least a portion of the periphery of said main cover (112),
- projecting downwards from said main cover (112), and
- positioned so that said first strip (602) is located outside a second strip (606), provided on a surface on the side of the upper panel (110) and projecting upwards.

2. The vehicle (100) according to the preceding claim, **characterized in that** at least one secondary cover (114, 116) is provided rotatable about an axis of rotation (118) between a closed position and an open position allowing access in the upper panel (110).

3. The vehicle (100) according to the preceding claim, **characterized in that** at least one secondary cover (114, 116) is provided rotatable about a longitudinal axis of rotation (118).

4. The vehicle (100) according to the preceding claim, **characterized in that** at least one secondary cover (114, 116) is provided rotatable about a longitudinal axis of rotation (118) positioned at a distance from an upper corner (120) of said vehicle (100), so that said upper cover (114, 116) allows access from said upper corner (120).

5. The vehicle according to any one of the preceding claims, **characterized in that** at least one cover is provided rotatable about a transversal axis of rotation.

6. The vehicle (100) according to any one of the preceding claims, **characterized in that** it comprises a means (714) for holding at least one secondary cover (114, 116) in open position.

7. The vehicle (100) according to the preceding claim, **characterized in that** the means of holding in open position comprises a stay (714) deploying when the secondary cover (114, 116) is in open position.

8. The vehicle (100) according to any one of the preceding claims, **characterized in that** at least one secondary cover (114, 116) has a width, measured in the transversal direction of the vehicle (100), less than or equal to one half of the width of said vehicle (100) or of the main cover (112).

9. The vehicle (100) according to any one of the preceding claims, **characterized in that** at least one secondary cover (114, 116) has a length, measured in the longitudinal direction of the vehicle (100), less than or equal to one half of the length of the main cover (112).

10. The vehicle (100) according to any one of the preceding claims, **characterized in that** it comprises at least one means (712) of locking at least one secondary cover (114, 116) in closed position.

11. The vehicle (100) according to any one of the preceding claims, **characterized in that** it comprises at least one watertightness means (502) of at least one secondary cover (114, 116).

12. The vehicle (100) according to claim 11, **characterized in that** at least one watertightness means of the secondary cover (114, 116) is identical to a watertightness means of the main cover (112).

13. The vehicle (100) according to any one of the preceding claims, **characterized in that** it comprises a technical compartment, called a cradle, provided in the upper panel (110) of said vehicle (100) in order to accommodate:
- one or more electrical energy storage modules (402₁-402₄), in particular rechargeable, and
- one or more electrical/electronic device(s) (404₁-404₄) relating to said electrical energy storage modules (402₁-402₄).
the main cover (112) being provided to cover said cradle, and at least one secondary cover (114, 116) being provided to allow an access to a lateral area of said cradle, in the longitudinal direction of said vehicle (100), comprising one of said electrical/electronic device(s) (404₁-404₄).

14. The vehicle (100) according to any one of the preceding claims, **characterized in that** it relates to a rechargeable electric bus or tyred tram.
